(19)

Europäisches
Patentamt
European
Patent Office
Office européen
des brevets

(11) **EP 3 432 434 A1**

(12) **EUROPEAN PATENT APPLICATION**

(43) Date of publication:
**23.01.2019 Bulletin 2019/04**

(51) Int Cl.:
***H02H 9/04*** *(2006.01)*          *H02H 9/00* *(2006.01)*

(21) Application number: **18182544.9**

(22) Date of filing: **09.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.07.2017 US 201715652033**

(71) Applicant: **NXP B.V.**
**5656 AG Eindhoven (NL)**

(72) Inventors:
• **Liu, Xiaoqun**
  **Redhill, Surrey RH1 1QZ (GB)**

• **Yazdi, Ahmad**
  **Redhill, Surrey RH1 1QZ (GB)**
• **Kwaaitaal, Stefan**
  **Redhill, Surrey RH1 1QZ (GB)**
• **Speelman, Cornelis Johannes**
  **Redhill, Surrey RH1 1QZ (GB)**
• **Zhang, Xu**
  **Redhill, Surrey RH1 1QZ (GB)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(54) **VOLTAGE CLAMP CIRCUIT FOR SURGE PROTECTION**

(57)      A clamp circuit (210) disposed between a receptacle (120) and a circuit to be protected (220) when a connector connects to the receptacle, the clamp circuit including a voltage detector (230) configured to determine a level of a surge voltage in comparison to a threshold voltage, the voltage detector including a plurality of field effect transistors, FETs (270) of a first conductivity type connected in series, a first FET (281) of a second conductivity type and a first resistor (R1) in parallel with the plurality of FETs, a second FET (291) of the first conductivity type in parallel with the first FET, and a discharge circuit (240) to discharge the surge voltage when the surge voltage approaches the threshold voltage.

Fig. 2

FIG. 2

**Description**

TECHNICAL FIELD

Embodiments described herein generally relate to clamping circuits for surge voltage protection when cables are connected thereto.

SUMMARY

A brief summary of various embodiments is presented below. Some simplifications and omissions may be made in the following summary, which is intended to highlight and introduce some aspects of the various embodiments, but not to limit the scope of the invention. Detailed descriptions of embodiments adequate to allow those of ordinary skill in the art to make and use the inventive concepts will follow in later sections.

Various embodiments include a clamp circuit disposed between a receptacle and a circuit to be protected when a connector connects to the receptacle, the clamp circuit including a voltage detector configured to determine a level of a surge voltage in comparison to a threshold voltage, the voltage detector including a plurality of field effect transistors (FETs) of a first conductivity type connected in series, a first FET of a second conductivity type and a first resistor in parallel with the plurality of FETs, a second FET of the first conductivity type in parallel with the first FET, and a discharge circuit to discharge the surge voltage when the surge voltage approaches the threshold voltage. The receptacle may include a plurality of pins to complete a power loop with the connector.

The clamp circuit may include a current limitation resistor disposed between the clamp circuit and the receptacle.

The current limitation resistor may be off-chip and not on a same substrate as the circuit to be protected.

The clamp circuit may reside on-chip on a same substrate as the circuit to be protected.

The plurality of FETs may be configured as a voltage divider to detect the surge voltage.

The plurality of FETs may be in series with a second resistor and the voltage across the second resistor determines whether the first FET of the second conductivity type turns on.

The first FET of the second conductivity type may be in series with the first resistor, and the voltage across the first resistor may determine whether the second FET of the first conductivity type is turned on.

The clamp circuit may include a large transistor of the second conductivity type, wherein a gate from the second FET of the first conductivity type controls the large transistor of the second conductivity type, wherein the large transistor is sized to discharge the surge voltage.

The clamp circuit may include a resistor connected from the gate of the large transistor of the second conductivity type to ground.

Various embodiments also include a method of discharging a surge voltage using a clamp circuit to protect an electronic circuit, including receiving a surge voltage at a receptacle, determining whether the surge voltage is higher than a threshold voltage, detecting the surge voltage using a voltage divider that includes transistors of a first conductivity type, triggering a transistor of a second conductivity type using the lowered surge voltage, triggering a second transistor of the first conductivity type to turn on a discharge circuit, and discharging the surge voltage to ground to protect the electronic circuit.

The surge voltage may be received at a receptacle.

The method may include using a current limitation resistor disposed between the clamp circuit and the receptacle.

The current limitation resistor may be off-chip and not on a same substrate as the circuit to be protected.

The clamp circuit may reside on-chip on a same substrate as the circuit to be protected.

The voltage divider may be in series with a first resistor and the voltage across the first resistor determines whether the transistor of the second conductivity type is triggered.

A voltage across the first resistor may determine whether the second transistor of the first conductivity type is turned on.

Discharging the surge voltage may include turning on a large transistor of the second conductivity type to discharge the surge voltage.

BRIEF DESCRIPTION OF THE DRAWINGS

Additional objects and features of the invention will be more readily apparent from the following detailed description and appended claims when taken in conjunction with the drawings. Although several embodiments are illustrated and described, like reference numerals identify like parts in each of the figures, in which:

FIG. 1 illustrates a connector and receptacle in accordance with embodiments described herein; and
FIG. 2 illustrates a circuit diagram of a clamp circuit to protect an electronic device in accordance with embodiments described herein.

DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. As used herein, the terms "context" and "context object" will be understood to be synonymous, unless otherwise indicated. Descriptors such as "first," "second," "third," etc., are not meant to limit the order of elements discussed, are used to distinguish one element from the next, and are generally interchangeable.

Embodiments described herein include a voltage clamp circuit configured to protect electronic device circuits from being damaged by over-voltage, surge voltage, electrostatic discharge (ESD), and other voltage spikes at an interface. The damaging voltage increases may occur at a receptacle of a first electronic device when a connector of a second electronic device is coupled to the receptacle on the first electronic device. The coupling of the connector to the first electronic device may be a direct connection or may be through a cable or wires of varying lengths. The receptacle may receive a USB connector such as a USB 2.0, USB Type-C, USB 3.1, or other similar connectors that are known in the art.

In some circuit designs, transient voltage suppression (TVS) is used for surge protection. When a surge voltage is higher than a certain level, a TVS circuit in an electronic device is triggered and the surge is discharged through the TVS circuit to a ground plane. A bill of materials (BOM) of the system that uses TVS increases because of the expense and number of components used in the implementation of TVS. Also, more than one TVS circuit is needed because each signal line connected from an internal circuit to be protected to a type-C or other receptacle uses a TVS circuit. Thus, extra printed circuit board (PCB) area is used in the implementation of TVS circuits.

Embodiments described herein having a voltage clamping circuit may be integrated on a same silicon substrate of a circuit to be protected that is connected to a type-C or other receptacle with little extra expense. Compared to other designs, BOMs are reduced and a need for extra area on a PCB is avoided.

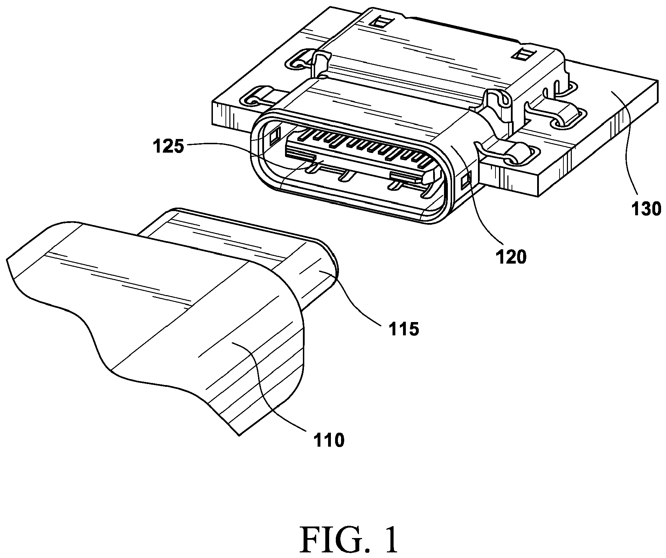

FIG. 1 illustrates a receptacle 120 connected to a partially illustrated printed circuit board (PCB) 130 of a first electronic device. The receptacle 120 may receive connectors of various types, including USB 2.0, USB Type-C, USB 3.1, or similar receptacles that are vulnerable to voltage surges. The PCB 130 may include a number of circuits that are susceptible to over-voltage damage. The PCB 130 may terminate with a plurality of pins 125 enclosed within the receptacle 120. Illustrated in FIG. 1 is also a cable 110 and a connector 115 such as a type-C connector that may be plugged into the receptacle 120.

In a physical layer (PHY) protocol system, for example, during a transient time before the connector 115 is plugged into the receptacle 120, the cable 110 having the connector 115 may be precharged, and there may exist high voltage at the connector 115. When the connector 115 is coupled to the receptacle 120, the voltage may be transferred to the receptacle 120 causing a surge voltage at pins 125 of the receptacle 120. The surge voltage may often be high enough to damage circuits connected to the PCB 130 within an electronic device (not illustrated) if the circuits are not protected.

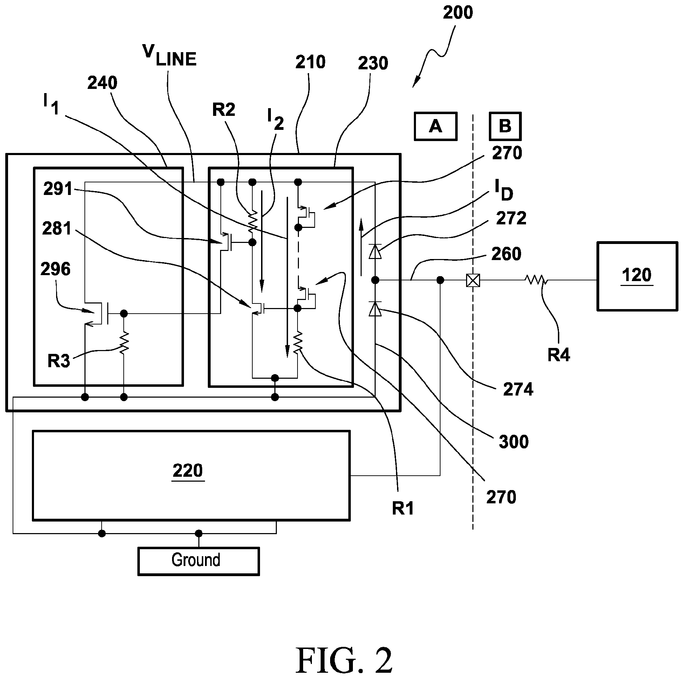

FIG. 2 illustrates a circuit diagram 200 of a clamp circuit 210 configured to protect an electronic device 220 in accordance with embodiments described herein. The clamp circuit 210 may include a voltage detector 230 and a discharge circuit 240 on a same substrate as the electronic device 220 connected to the receptacle 120. In the clamp circuit 210, any electrical surge that is greater than a baseline is grounded by the surge protector, while normal voltage is continuously supplied to the electronic device 220. A section of the circuit diagram labeled "A" may represent the (PCB) 130 that includes the clamp circuit 210 and the electronic device 220. The side "A" may be referred to as on-chip. The area "B" illustrated in FIG. 1 may be labeled off-chip, representing an area outside of the PCB 130 in the receptacle 120.

The voltage detector 230 may include a plurality of PMOS FETs 270 to detect a surge voltage received at a protection line 260 of the receptacle 120. The voltage detector 230 determines whether a received surge voltage at the protection line 260 is high enough to be discharged through the discharge circuit 240. Preceding the voltage detector 230 is a pair of diodes 272 and 274 such as electrostatic detection (ESD) diodes to clamp any excess input voltages to the supply lines or from ground.

The surge voltage may result from a coupling of the connector 115 to the receptacle 120, from an electrostatic discharge (ESD), or other over-voltage event at a voltage that would damage circuits within the electronic device 220. The voltage detector 230 may detect a surge voltage coming from the connector 115 when the connector 115 is connected to the receptacle 120. When the surge voltage is higher than a threshold level, the voltage detector 230 triggers the discharge circuit 240 to discharge the surge voltage and clamp the voltage level of the electronic circuit 220 at a desired level. In order to limit the discharge current, a serial resistor R4 may be included at an input to the clamp circuit 210.

In the voltage detector 230, the FETs 270 may be rated at a small voltage and size to limit the size of the voltage detector circuit 230. The FETs 270 may be connected drain to gate, permitting the FETs 270 to act as diodes with current flow in one direction. Depending on an expected protection voltage, the dotted lines between FETs 270 indicate that the voltage detector 230 may be configured with varying numbers of FETs 270. The series connected FETs 270 will act as a voltage divider, separating the voltage across each transistor and the resistor. Current through the series connected FETs 270 may be designated $I_1$. For example, five series connected FETs 270 may be implemented in the voltage detector circuit 230. If a surge voltage of 15 volts arrives at the protection line 260, the surge voltage will be distributed amongst the five FETs 270 and the resistor R1.

The voltage detector 230 may also include NMOS FETs 281 and 291. The gate of NMOS FET 281 may be controlled by the divided voltage at the gate/drain terminal of a FET 270. The voltage across the resistor R1 will be equivalent to the voltage applied to the gate of the NMOS FET 281. In a surge event, the voltage V1 across the resistor R1 may be large enough to turn on the NMOS FET 281. Also included is resistor R2 and PMOS FET 291. The current $I_2$ through R2 in a surge event may result in a voltage high enough to turn on transistor 291. When transistor 291 is turned on, the surge voltage may be discharged through the discharge circuit 240.

As illustrated in FIG. 2, the discharge circuit 240 may include a large NMOS FET 296 and resistor R3. The transistor 296 may be sized and rated to withstand surge voltages on the order of twenty volts. When a surge voltage is present on the line $V_{LINE}$, current flowing through the transistor 291 and through the resistor R3 to create a voltage drop at the gate of the transistor 296. The transistor 296 may turn on and any voltage on the line $V_{LINE}$ above the threshold voltage is clamped.

According to the International Electrotechnical Commission's electromagnetic compatibility standard IEC61000-4-5, a ramp-up time of surge voltage is about 8uS and ramp-down time is about 20uS. This total ramping time may be too slow to trigger an existing internal ESD protection circuit of an electronic device. When a ramp up time is lower and faster than about 100ns, an existing ESD protection circuit may be triggered to protect an electronic device. When a ramp up time is slower than 100ns, the clamp circuit 210 may respond to the surge and protect the electronic circuit 220

Embodiments described herein can be integrated in a same silicon substrate as the electronic device circuit 220 connected to the receptacle 120. The clamp circuit 210 may effectively protect the electronic device circuit 220 from the surge voltage without using solutions such as transient voltage suppressor (TVS) that have a large bill of materials, use more space, and add complexity. Embodiments of the clamp circuit illustrated and described herein result in low cost, high performance, and a high level of integration.

In operation, when a voltage at the protection line 260 is lower than the maximum endurable voltage of 220, the discharge circuit 240 is not triggered and the voltage on the protection line can be expressed by the following equation (1):

$$V_{prot\_line} = V_{270} + V_{R1} = n*a* V_T*\ln(I_d/I_s) + R_1* I_d, \qquad (1)$$

where $I_d$ is the current through a transistors string 270, $V_T = kT/q$, about 26mV at room temperature, n is the number of the transistors 270, a is a nonideality factor of CMOS which is larger than 1, and $I_s$ is a constant current used to describe the transfer characteristic. The voltage $V_{R1}$ across resistor $R_1$ can be expressed by the following equations:

$$V_{R1} = V_{prot\_line} - V_T*a*\ln(I_d/I_s) \qquad (2),$$

where

$$I_d = I_s *\exp(V_{MPdx}/(n*a*V_T)) \qquad (3)$$

According to equations (1) - (3), during normal operation mode which is non-surge event, that is, when a maximum voltage at the protection line 260 is lower than $V_{MAX}$, which is the maximum endurable voltage of 220, a voltage is large enough to pass a current $I_D$ through a high side diode 272. The low side diode 274 is configured to block any current in the protection line 260 from entering the ground line 300 and affecting the electronic device circuit 220. In a non-surge event, the current $I_d$ through the transistor string 270 will be low enough such that the voltage $V_1$ across the resistor $R_1$ is low enough to keep the NMOS transistor 281 off. Because the NMOS transistor 281 is off, little current will flow through the resistor $R_2$, and a voltage across the resistor $R_2$ is kept low enough to keep the voltage at a gate of the PMOS transistor 291 also in a off state. Because the transistor 291 is off, current will not flow through the transistor 291 and there will not be sufficient voltage potential at the gate of a large NMOS transistor 296, thus the discharge circuit 240 is also off during a non-surge event. This configuration ensures very low leakage current from the protection line 260 through the voltage detector 230 and discharge circuit 240 to GND 300.

Alternatively, when a surge voltage ramps up and approaches VMAX, the current $I_D$ through the transistor string 270 increases faster, and therefore a level of $V_1$ across the resistor $R_1$ increases until it is high enough to turn on NMOS transistor 281. Because transistor 281 is turned on, a current will flow through resistor $R_2$ and a voltage across $R_2$ will be high enough to turn on PMOS transistor 291. Because the transistor 291 is turned on, the voltage across $R_3$ will be high enough to turn on NMOS transistor 296, and the voltage at protection line will be clamped, Therefore, the electronic device circuit 220 is protected.

During voltage clamping, there exists a discharge current from the protection line 260 through the current limiting resistor 250, through the large NMOS transistor 296 to GND.

The discharge current can be as high as a few amps. The size of the transistor 296 may be large enough to sustain the discharge current $I_D$.

The transistor 281 and resistor $R_2$, together with transistor 291 and resistor $R_3$ may be configured as two common source amplifiers to ensure the clamp circuit 210 is strong enough to drive the large discharge transistor 296.

Embodiments described herein describe transistors to be a first conductivity type and a second conductivity type. Persons skilled in the art may recognize that conductivity types of the various transistors 270, 281, 286, and 291 may be reversed with functionality of the claim circuit 210 remaining relatively the same.

A clamp circuit disposed between a receptacle and a circuit to be protected when a connector connects to the receptacle, the clamp circuit including a voltage detector configured to determine a level of a surge voltage in comparison to a threshold voltage, the voltage detector including a plurality of field effect transistors (FETs) of a first conductivity type connected in series, a first FET of a second conductivity type and a first resistor in parallel with the plurality of FETs, a second FET of the first conductivity type in parallel with the first FET, and a discharge circuit to discharge the surge voltage when the surge voltage approaches the threshold voltage.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the spirit and scope of the invention. Accordingly, the foregoing disclosure, description, and figures are for illustrative purposes only and do not in any way limit the invention, which is defined only by the claims.

**Claims**

1. A clamp circuit disposed between a receptacle and a circuit to be protected when a connector connects to the receptacle, the clamp circuit comprising:

   a voltage detector configured to determine a level of a surge voltage in comparison to a threshold voltage, the voltage detector including:

      a plurality of field effect transistors (FETs) of a first conductivity type connected in series;
      a first FET of a second conductivity type and a first resistor in parallel with the plurality of FETs;
      a second FET of the first conductivity type in parallel with the first FET; and

   a discharge circuit to discharge the surge voltage when the surge voltage approaches the threshold voltage.

2. The clamp circuit of claim 1, wherein the receptacle includes a plurality of pins to complete a power loop with the connector.

3. The clamp circuit of claim 1 or 2, further comprising a current limitation resistor disposed between the clamp circuit and the receptacle.

4. The claim circuit of claim 3, wherein the current limitation resistor is off-chip and not on a same substrate as the circuit to be protected.

5. The clamp circuit of any preceding claim, wherein the clamp circuit resides on-chip on a same substrate as the circuit to be protected.

6. The clamp circuit of any preceding claim, wherein the plurality of FETs are configured as a voltage divider to detect the surge voltage.

7. The clamp circuit of any preceding claim, wherein the plurality of FETs are in series with a second resistor and the voltage across the second resistor determines whether the first FET of the second conductivity type turns on.

8. The clamp circuit of any preceding claim, wherein the first FET of the second conductivity type is in series with the first resistor, and the voltage across the first resistor determines whether the second FET of the first conductivity type is turned on.

9. The clamp circuit of any preceding claim, further comprising a large transistor of the second conductivity type, wherein a gate from the second FET of the first conductivity type controls the large transistor of the second conductivity type, wherein the large transistor is sized to discharge the surge voltage.

10. The clamp circuit of claim 9, comprising a resistor connected from the gate of the large transistor of the second conductivity type to ground.

11. A method of discharging a surge voltage using a clamp circuit to protect an electronic circuit, comprising:

receiving a surge voltage at a receptacle;
determining whether the surge voltage is higher than a threshold voltage;
detecting the surge voltage using a voltage divider that includes transistors of a first conductivity type;
triggering a transistor of a second conductivity type using the lowered surge voltage;
triggering a second transistor of the first conductivity type to turn on a discharge circuit; and
discharging the surge voltage to ground to protect the electronic circuit.

12. The method of claim 11, wherein the surge voltage is received at a receptacle.

13. The method of claim 11 or 12, further comprising using a current limitation resistor disposed between the clamp circuit and the receptacle.

14. The method of claim 13, wherein the current limitation resistor is off-chip and not on a same substrate as the circuit to be protected.

15. The method of any of claims 11 to 14, wherein the clamp circuit resides on-chip on a same substrate as the circuit to be protected.

125

120

130

115

110

FIG. 1

FIG. 2

Europäisches
Patentamt

European
Patent Office

Office européen
des brevets

# EUROPEAN SEARCH REPORT

Application Number

EP 18 18 2544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/355157 A1 (HUANG MINE-YUAN [TW] ET AL) 4 December 2014 (2014-12-04) | 1,2,6-12 | INV. H02H9/04 |
| Y | * paragraphs [0046] - [0048]; figure 9 * | 3-5, 13-15 | ADD. H02H9/00 |
| Y | US 2010/328827 A1 (LAI DA-WEI [TW] ET AL) 30 December 2010 (2010-12-30) * the whole document * | 3-5, 13-15 | |
| X | US 2008/218922 A1 (MALLIKARARJUNASWAMY SHEKAR [US] ET AL) 11 September 2008 (2008-09-11) | 1,2,6-9, 11-13 | |
| Y | * paragraphs [0029] - [0033]; figure 3A * | 3-5, 13-15 | |
| A | | 10 | |
| A | US 2012/180008 A1 (GIST III WILLIAM B [US] ET AL) 12 July 2012 (2012-07-12) * the whole document * | 1-15 | |

TECHNICAL FIELDS
SEARCHED      (IPC)

H02H

The present search report has been drawn up for all claims

| Place of search | Date of completion of the search | Examiner |
|---|---|---|
| Munich | 11 December 2018 | Trifonov, Antoniy |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 18 2544

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2018

| Patent document cited in search report | | Publication date | Patent family member(s) | | Publication date |
|---|---|---|---|---|---|
| US 2014355157 | A1 | 04-12-2014 | TW | 201445700  A | 01-12-2014 |
| | | | US | 2014355157 A1 | 04-12-2014 |
| US 2010328827 | A1 | 30-12-2010 | US | 2010328827 A1 | 30-12-2010 |
| | | | US | 2013163129 A1 | 27-06-2013 |
| US 2008218922 | A1 | 11-09-2008 | CN | 101617452  A | 30-12-2009 |
| | | | TW | 200841454  A | 16-10-2008 |
| | | | US | 2008218922 A1 | 11-09-2008 |
| | | | WO | 2008106053 A1 | 04-09-2008 |
| US 2012180008 | A1 | 12-07-2012 | US | 2012180008 A1 | 12-07-2012 |
| | | | US | 2013163131 A1 | 27-06-2013 |

EPO FORM P0459

For more details about this annex : see Official Journal of the European Patent Office, No. 12/82